# EUROPEAN PATENT APPLICATION

(11) **EP 1 938 680 A2**
(43) Date of publication of application: **02.07.2008**
(21) Application number: 07018915.4
(22) Date of filing: 26.09.2007
(51) Int. Cl.: A01G 25/16, G05B 19/042

(54) **Irrigation two-wire communication control**

(30) Priority: 29.12.2006 US 618113
(71) Applicant: Rain Bird Corporation, Azusa CA 91702 (US)
(72) Inventor: Crist, Timothy John, Tucson, AZ 85747 (US)
(74) Representative: HOFFMANN EITLE

(57) **Abstract**

The present embodiments provide methods, systems and apparatuses for use in implementing and/or controlling irrigation through communication over a two-wire interface. Some method of controlling irrigation over a two-wire interface define a reference voltage at a first voltage level, receive an AC voltage input signal, detect a synchronization identifier encoded on the signal relative to the reference voltage at the first level, define the reference voltage at a second voltage level, identify a first data bit of a communication to coordinating irrigation encoded on the signal following the synchronization identifier.

## Description

### FIELD OF THE INVENTION

The present invention relates generally to communication between irrigation devices, and more particularly to communication between irrigation devices over two-wired communication paths.

### BACKGROUND

Many irrigation systems and electronics are powered by 50/60Hz AC voltage. Some systems further modulate this power source to provide data communication. Data and power sent in this manner are often referred to as a "two-wire interface".

Decoding a two-wire interface is typically computationally complex and involves code intensive algorithms. These operations usually employ sampling of the waveforms in detecting a rise or fall in slope and finding peaks. Constant monitoring is often required to detect peaks and decode the data.

When this processing is done in a remotely located device the processing time is generally proportional to power consumption. Power consumption typically is a limiting factor to how many devices can exist and operate on any one two-wire path.

### SUMMARY OF THE EMBODIMENTS

The present invention advantageously addresses the needs above as well as other needs through the provisions of methods, apparatuses and systems for use in providing two-wired irrigation control communication. Some embodiments provide methods of controlling irrigation based on communications over a two-wire interface that define a reference voltage at a first voltage level, receive an AC voltage input signal, detect a synchronization identifier encoded on the signal relative to the reference voltage at the first level, define the reference voltage at a second voltage level, identify one or more data bits of communication to coordinating irrigation encoded on the signal following the synchronization identifier.

Other embodiments provide methods of controlling irrigation. These methods set a variable reference voltage to a first voltage level and activating a timer; determine whether the timer exceeds a first time threshold; register a first type of data bit in response to determining that the first time threshold is exceeded; compare a voltage level of a modulated AC voltage input signal received over a two-wire interface regarding implementing irrigation with the variable reference voltage set at the first voltage level prior to determining that the first time threshold has been exceeded, detect when the ' voltage level of the input signal exceeds the variable reference voltage set at the first voltage level prior to determining that the first time threshold has been exceeded, and register a second type of data bit when it is determined that the voltage level of the input signal exceeds the variable reference voltage set at the first voltage level.

Still further embodiments provide methods of implementing irrigation through communications over a two-wire interface. These methods compare a voltage level of an alternating signal with a variable reference voltage set at a first voltage level; detect when the voltage level of the signal fails to cross the variable reference voltage at the first voltage level; awaken from a sleep state when it is detected that the voltage level of the signal fails to cross the variable reference voltage at the first voltage level and change the variable reference voltage to a second voltage level; return to the sleep state following the changing of the variable reference voltage to the second voltage level; and reawaken from the sleep state and detect a data bit of a communication relative to the second voltage level.

Some embodiments comprise systems that implement irrigation. These systems can include a two-wire interface input that receives an alternating signal; a conversion unit coupled with the two-wire interface input that generates a data signal according to the received alternating signal; a variable reference voltage generator that generates a reference voltage; a comparator coupled with the conversion unit and the variable reference voltage generator such that the comparator outputs comparator signals relative to a relationship between a voltage level of the data signal and a voltage level of the reference voltage; and a controller coupled with the comparator that receives the comparator signals.

Other embodiments provide apparatuses that control irrigation. Some of these embodiments comprise a two-wire interface input coupled with a two-wire interface to receive an AC voltage current input signal; a conversion unit coupled with the two-wire interface input to receive the input signal and output an alternating data signal proportional to the input signal; a variable reference voltage generator that generates a reference voltage; a comparator coupled with the variable reference voltage generator and the conversion unit and compares the reference voltage with the data signal generating a comparator output relative to a relationship between the reference voltage and the data signal; and memory that stores levels of the comparator output.

Further embodiments provide methods of decoding a signal from a two wire path in an irrigation control system. Some of these methods select a first reference voltage level from a plurality of reference voltage levels; and determine when a voltage level of an AC voltage input signal coordinating irrigation reaches the first reference voltage level; and decode data encoded on the input signal based on the determining step.

Additionally or alternatively, some embodiments provide methods of decoding a signal from a two wire path in an irrigation control system by selecting a first reference voltage level from a plurality of reference voltage levels; determining when a voltage level of an incoming voltage signal directed to controlling irrigation reaches the first reference voltage level; selecting a second reference voltage level from the plurality of reference voltage levels relative to the determination of when the voltage level of the incoming voltage signal reaches the first reference voltage; and determining when the voltage level of the incoming voltage signal reaches the second reference voltage level; and decoding data encoded on the incoming voltage signal based on the determining when the voltage level of the incoming voltage signal reaches the second reference voltage level.

A better understanding of the features and advantages of the present invention will be obtained by reference to the following detailed description of the invention and accompanying drawings which set forth an illustrative embodiment in which the principles of the invention are utilized.

### BRIEF DESCRIPTION OF THE DRAWINGS

The above and other aspects, features and advantages of the present invention will be more apparent from the following more particular description thereof, presented in conjunction with the following drawings wherein:
FIG. 1 depicts a simplified block diagram of an irrigation system according to some embodiments;
FIG. 2 depicts a simplified flow diagram of a process of receiving communications and/or controlling irrigation according to some embodiments;
FIG. 3 depicts a simplified block diagram of an embodiment of an irrigation device that couples with and controls field stations and further couples with a two-wire interface to receive power as well as irrigation control instructions, parameters and/or other such communications;
FIG. 4 depicts a simplified graphical representation of a portion of an alternating input signal according to some embodiments that is received by the irrigation device;
FIG. 5 depicts a simplified schematic diagram of an implementation of a variable reference voltage generator according to some embodiments;
FIG. 6 depicts a simplified schematic diagram of an alternative implementation of a variable reference voltage generator that includes additional reference voltage activation circuitry and a variable reference voltage range selection circuit;
FIG. 7 depicts a simplified schematic diagram of the conversion unit according to some embodiments that in part extracts the data signal VDATAF and defines an input signal reference voltage VREFF; .
FIG. 8 depicts a simplified schematic diagram of a comparator;
FIG. 9 depicts a simplified graphical representation of voltage over time (T) of a data signal encoded according to some implementations that can be extracted and/or generated through the conversion unit 330 based on an input signal received over a two-wire interface;
FIGS. 10-11 show expanded views of portions of the data signal of FIG. 9;
FIG. 12 depicts a simplified flow diagram of a process according to some embodiments implemented through the irrigation device that extracts data bits from an encoded alternating or AC voltage signal;
FIG. 13 depicts a graphical representation of the data signal similar to that of FIG. 9; and
FIG. 14 depicts a simplified flow diagram of a process according to some embodiments that identifies communications and implements appropriate actions.

Corresponding reference characters indicate corresponding components throughout the several views of the drawings. Skilled artisans will appreciate that elements in the figures are illustrated for simplicity and clarity and have not necessarily been drawn to scale. For example, the dimensions of some of the elements in the figures may be exaggerated relative to other elements to help to improve understanding of various embodiments of the present invention. Also, common but well-understood elements that are useful or necessary in a commercially feasible embodiment are often not depicted in order to facilitate a less obstructed view of these various embodiments of the present invention.

### DETAILED DESCRIPTION

The present embodiments provide control over distributed devices coupled with a two-wire interface such as irrigation systems and/or devices. For example, irrigation electronics can be powered by a 50 or 60Hz AC voltage over a two-wire power line. This AC power can further be modulated, for example, by "clipping" or attenuating the positive and/or negative peaks, and/or transmitting multi-level voltage steps on the two wire path. Data and power can thus be sent over a single two-wired power line, some times referred to below as a two-wire interface, and/or data and power sent in this manner can be referred to as a two-wire interface.

Decoding a two-wire interface can be computationally complex and often employs code intensive algorithms. This decoding operation typically includes sampling the power waveforms and detecting a rise or fall in slope. The rate of rise or fall is then calculated and a peak is found. The waveform is typically constantly monitored to detect peaks and decode synchronization and data information. Further, noise can be a problem on such systems and as a result often these systems employ over sampling to compensate for noise. When this processing is done by a device remotely located and drawing power from the two-wire interface the processing time can be proportional to power consumption. Power consumption is generally a limiting factor to how many devices can exist and operate on a single two-wire path. Complex algorithms typically also use more program space and can result in the use of more memory and computational power. Therefore, more complex and generally more expensive microcontrollers and/or microprocessors are typically needed to implement these relatively more complex algorithms. These more complex microcontrollers/processors typically also draw larger amounts of power effectively reducing the number of devices that can be coupled with a single two-wire path resulting in larger numbers of two-wire paths having to be distributed to cover an area and increases costs of implementing such a distributed system.

The present embodiments, however, simplify the communication and/or decoding over a two-wire power line. Further, the simplified system allows a larger number of devices to be coupled with a single two-wire power line and can improve accuracy of communications over the two-wired power line and the implementation, control and/or coordination of irrigation control. Furthermore, the simplified processing achieved through the present embodiments reduces the power consumption and in some instances allows many devices on a two-wire interface to be temporarily powered down, put input a sleep state or mode, and/or operated at reduced clock rates further reducing power consumptions.

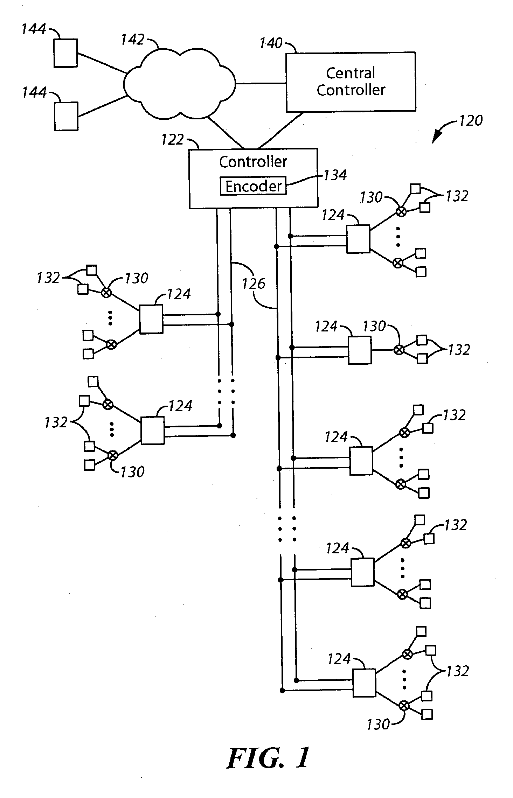

FIG. 1 depicts a simplified block diagram of an irrigation system 120 according to some embodiments. The irrigation system includes an irrigation controller 122 and one or more remote irrigation devices 124 coupled with the irrigation controller through one or more two-wire power lines, paths or interfaces 126. The irrigation devices 124 can each include a decoder and are coupled with one or more valves and/or field stations 130 that cooperate with one or more sprinklers, rotors, drip-lines, and/or other water delivery devices 132 to supply water to the water delivery devices. In some implementations, the irrigation controller 122 is a satellite controller and further couples with a central irrigation controller 140 that provides at least some control over the irrigation controller. Typically, the central irrigation controller 140 couples with a plurality of irrigation controllers 122 and/or other such satellite irrigation controllers to coordinate the irrigation by the multiple irrigation controllers. The irrigation controller 122 further includes an encoder 134 that allows the irrigation controller to encode information onto an AC power signal, for example, by clipping one or more of the positive and/or negative peaks of the signals, as described above and further below, providing communication in addition to power to the one or more irrigation devices 124. Encoders are well known in the art and as such no further explanation of an encoder is provided. The irrigation devices coupled with the two-wire interface 126 draw operating power from the two-wire line and/or interface 126 as well as receive communications, such as irrigation instructions, parameters, conditions and the like that at least in part can be used in controlling and/or coordinating the implementation of irrigation and/or irrigation schedules.

Further, the irrigation controller 122 can optionally couple with one or more distributed networks 142, such as an intranet, the Internet or other such networks. It is understood that the network 142, however, can be substantially any relevant wired or wireless communication network; networks or combination of networks to communicate data, such as public switched telephone network (PSTN), cellular, paging, radio frequency broadcast, hybrid networks of one or more of fiber, cable and/or satellite, and other relevant networks, and that the irrigation controller can connect with the network through wired, wireless or a combination of wired and wireless connections. By coupling with the network the irrigation controller 122 can access other devices 144 on the network, such as servers, weather stations, databases and the like to receive and/or forward scheduling information, control information, weather information, evapotranspiration (ET) data, operating parameters, and/or other such relevant data and information.

In operation, the irrigation devices 124 receive input power signals from over the two-wired interface 126 and attempt to decode communications encoded onto the AC voltage input signal. In some implementations, the irrigation devices detect a synchronization pulse or other identifier and synchronize the timing and/or operation of the irrigation device based on the receipt of that synchronization. Additional data can be decoded from the input signal. When multiple irrigation devices are active on a single two-wire interface, the power signal can include a device identifier (ID) that designates to which irrigation device or devices the communication is being directed. As such, an irrigation device can extract the device ID from the decoded data and determine whether the communication is directed to the irrigation device. When the communication is directed to the irrigation device, the irrigation device can utilize the data decoded and take appropriate action, such as activating or deactivating irrigation, implementing instructions or schedules, altering parameters and the like.

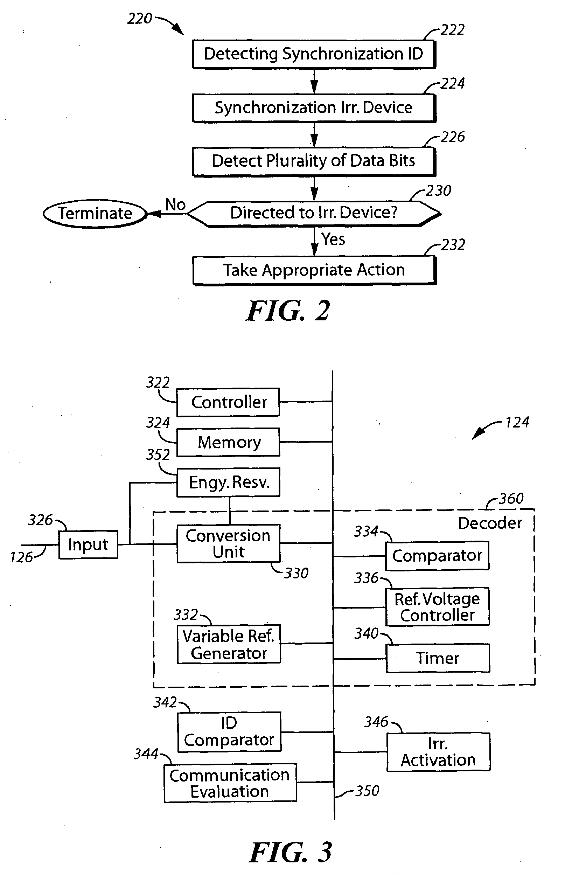

FIG. 2 depicts a simplified flow diagram of a process 220 of receiving communications and/or controlling irrigation according to some embodiments. In step 222, a synchronization identifier is detected. The synchronization identifier typically is defined by a modulated pulse or series of pulses that can be distinguished from other modulation, such as a predefined pattern, attenuating or clipping a predefined portion of a pulse (e.g., clipping a negative side of a pulse), attenuating one or more pulses by a predefined amount or other such detectable modulation.

In step 224, the irrigation device is synchronized, for example, noting a relationship between the receipt of the synchronization and one or more internal clocks and/or timers, adjusting one or more internal clocks and/or times, and/or internal component operations and/or other such synchronizations. For example, in some embodiments synchronization provides a known starting point for the irrigation device and/or processes of the irrigation device, to restart clocks and prepare to receive data over the two-wire path. In step 226, a plurality of data pulses are detected and decoded. These data pulses can include device ID, instructions, parameters and/or other such information as described above and further below. In step 230, it is determined whether the data being received over the two-wired interface are directed to the irrigation controller. When the communication is not the process 220 terminates and/or returns to step 222 to await a subsequent synchronization. Alternatively, step 232 is entered where the irrigation device 124 takes appropriate action, such as activating irrigation, interrupting and/or stopping irrigation, changing parameters, determining local parameters and transmitting a communication based on the determined parameters, and/or other such action.

FIG. 3 depicts a simplified block diagram of an embodiment of an irrigation device 124 that couples with and controls field stations 124 and further couples with a two-wire interface 126 to receive power as well as irrigation control instructions, parameters and/or other such communications. Numerous irrigation devices 124 can be coupled with a single two-wire interface 126. The irrigation device 124 includes a controller 322, one or more memory 324, a two-wire interface input 326, an AC input conversion unit 330, a variable reference voltage generator 332, one or more data voltage comparators 334, a reference voltage level controller 336, one or more timers 340, a device ID comparator 342, a data communication evaluator 344, and one or more action implementation units 346 that can implement actions according to the data communications received over the two-wire interface, such as an irrigation activation unit, an irrigation halting unit and/or other such units. The components of the irrigation device can be coupled through one or more direct connections, busses and/or other relevant coupling 350. Some embodiments further include a energy reserve 352 and/or other back up power that can allow the irrigation device 124 to initiate irrigation according to locally stored irrigation scheduling should power over the two-wire interface be interrupted. Power from the two-wire interface can, in some instances, be used to store power in the energy reserve.

The irrigation device can be implemented through hardware, software or a combination of hardware and software. In some implementations one or more components of the irrigation device are implemented through a single microprocessor, integrated circuit, microcontroller or other device. Additionally or alternatively, one or more of the components of the irrigation device can be implemented within the controller 322. For example, the reference voltage controller 336, some or all of the memory 324, the timer 340, ID comparator 342, communication evaluator 344, one or more of the action implementation units 346 and/or other components could be implemented in whole or in part through the controller 322. The irrigation device 124, can in some implementations, include a decoder 360 that comprises one or more components in decoding the received input signal, such as the conversion unit 330, the variable reference voltage generator 332, the comparator 334, the reference voltage controller 336 and/or one or more timers 340. Additionally in some instances, the ID comparator 342 and/or communication In some embodiments, many of the components of the irrigation device 124 are implemented through a microcontroller, such as one of the series of PIC16F677, 687, 689 manufactured by Microchip Technology, Inc. of Chandler, Arizona or other similar controller.

The controller 322 can be implemented through one or more processors, microprocessors, microcontrollers, state machines or other such relevant controllers or combinations of controllers that provide overall functionality, data processing, and control over the irrigation device 124. The one or more memory 324 can store software programs, executables, data, irrigation control programming, scheduling, runtime parameters, soil conditions and parameters, other relevant programs and data, and instructions executable by a processor, machine or computer. The memory can be implemented through ROM, RAM, EEPROM, volatile disk drives, flash memory, removable medium (e.g., floppy disc, hard disc, compact disc (CD), digital versatile disc (DVD), flash memory, and the like), and substantially any other relevant memory or combinations of memory. Generically, the memory 324 may also be referred to as a computer readable medium.

As introduced above, the controller and/or other components of the irrigation device 124 can be implemented by software stored in memory and executed on a microcontroller or processor, or otherwise stored and executed in firmware. Further, the controller and/or other components can be implemented through logic devices, hardware, firmware and/or combinations thereof. Thus, the processing described herein may be performed using substantially any relevant processor logic or logic circuitry.

The AC input conversion unit 330 is coupled with the two-wire interface input 326 to receive the AC voltage signal. In part, the conversion unit 330 attenuates the signal generating a data signal (VDATAF) that is at a level that is more readily utilized by the irrigation device 124. For example, in some instances, the voltage is attenuated to a level that can be utilized in integrated circuits, such as about 5V or less. Further in some embodiments, the conversion unit 330 identifies or extracts an input signal reference voltage (VREFF) as a reference level and/or bias level in further processing the input signal.

The variable reference voltage generator 332 is controlled in part by the controller 322 and generates a comparator reference voltage that is utilized by the comparator 334. In some embodiments, the variable reference voltage generator can alter the reference voltage allowing a single comparator to be used in identifying different aspects of the input signal as further described below, such as applying a first reference voltage at a first level to identify a synchronization indication, and altering the reference voltage to a second voltage level to detect bits of data encoded on the signal. A reference voltage controller 336 can be included that in part dictates a level of the reference voltage generated by the variable reference voltage generator 332.

The comparator 334, as introduced above, receives the reference voltage and compares that reference voltage with an extracted data signal (VDATAF). Based on the comparison, the comparator generates a comparator output signal that is proportional to the relationship between the applied reference voltage and the data signal. The comparator output signal is used to identify data bits encoded on the signal, and in some embodiments, can further activate or awaken at least a portion of the irrigation device 124 from a dormant or sleep state that significantly reduces power consumption as further described below. The timer 340, in some embodiments, is utilized in cooperation with the comparator output to identify data bits and/or synchronization based on one or more time thresholds, for example, time since a detection of a data bit. The timer can also further activate or awaken at least a portion of the irrigation device 124 from a dormant or sleep state that significantly reduces power consumption.

The ID comparator 342 and communication evaluation unit 344 extract data from the received bits to determine whether the communication encoded on the input signal is directed to the irrigation device 124 and/or identifies parameters, instructions and/or requests. The irrigation activation units 346 can implement one or more instructions, such as activating one or more field stations 130, adjust parameters and/or implement other operations.

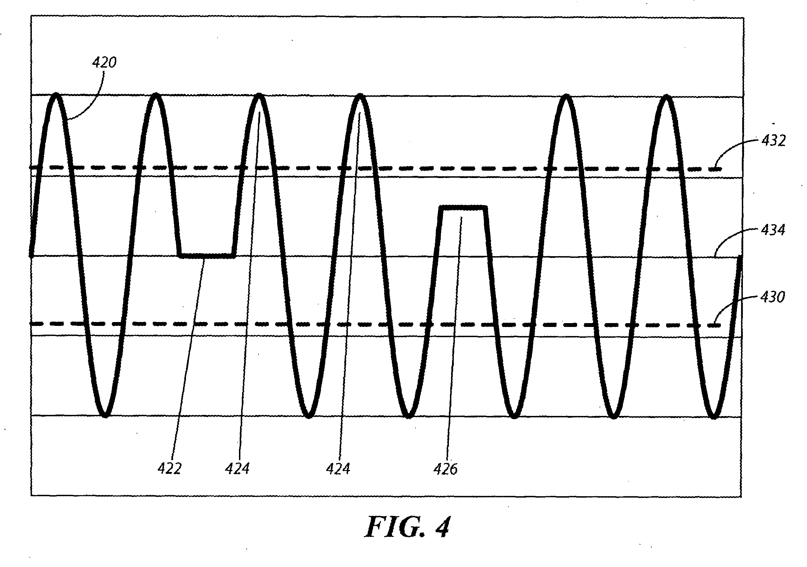

FIG. 4 depicts a simplified graphical representation of a portion of an alternating input signal 420 according to some embodiments that is received by the irrigation device 124. Information and/or data is encoded onto the input signal 420 that can be identified and/or extracted through the irrigating device 124. As an example, the input signal can be a 50 or 60 Hz wave form. One more of the high and/or low peaks can be truncated to indicate bits of information and/or synchronization indication. In some embodiments, a low or negative peak of the signal can be truncated to indicate a synchronization pulse 422. One or more subsequent high or positive peaks following the synchronization pulse can be identified as data peaks that are un-clipped 424 and/or clipped 426 to indicate logic bits (e.g., logic ones and zeros, respectively).

Two separate reference voltage levels, a lower reference voltage 430 and an upper reference voltage level 432 can also be defined through the reference voltage controller 336 and variable reference voltage generator 332. Further, the conversion unit 330 can define a central or signal input reference voltage level VREFF 434.

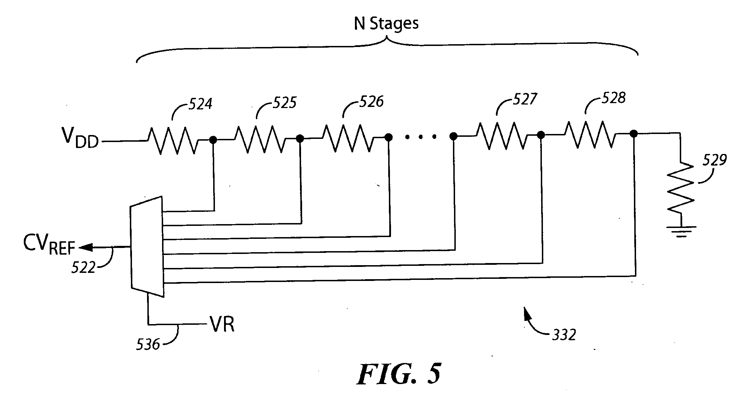

FIG. 5 depicts a simplified schematic diagram of an implementation of a variable reference voltage generator 332 according to some embodiments. The variable reference voltage generator can generate the variable reference voltage (CV_{REF}) 522 at a variety of different voltage levels. A plurality of resistors 524-529 are coupled in series with a tap between neighboring resistors. There can be substantially any number of stages (N). One or more multiplexers 534 couple with each tap and can be controlled by a control input (VR) 536 that defines which of the taps is utilized in supplying the variable reference voltage CV_{REF} 522. The multiplexer 534 can be replaced by a series of switches and/or other devices to select the desired voltage level. In some embodiments, the control input 536 defines the selected tap by n bit numbers, for example, when the number of stages N is 16, the bit word can be defined by a four (4) bit number (e.g., VR<3:0>). The resistors 524-529 can have substantially any level of resistance, and in some implementations, many of the resistors have substantially the same resistance to provide integral steps of voltage levels.

The control input 536 is controlled by the reference voltage controller 336 and can be based on the input signal reference voltage VREFF 434 extracted from the input signal 420 and the attenuation or clipping attempting to be identified. The measured input reference voltage VREFF can, in some embodiments, be forwarded to an analog-to-digital converter (not shown) that can be used when setting the voltage level thresholds of the variable reference voltage. For example, when attempting to detect the synchronization pulse that is clipped on a low peak 422, the control input 536 can be generated to select a relatively low voltage level so that the variable reference voltage 522 defines the lower reference voltage 430 (see FIG. 4), and when attempting to detect the data peaks when high peaks are clipped the control input can select a relatively high voltage level to generate the variable reference voltage 522 defining the high reference voltage 432.

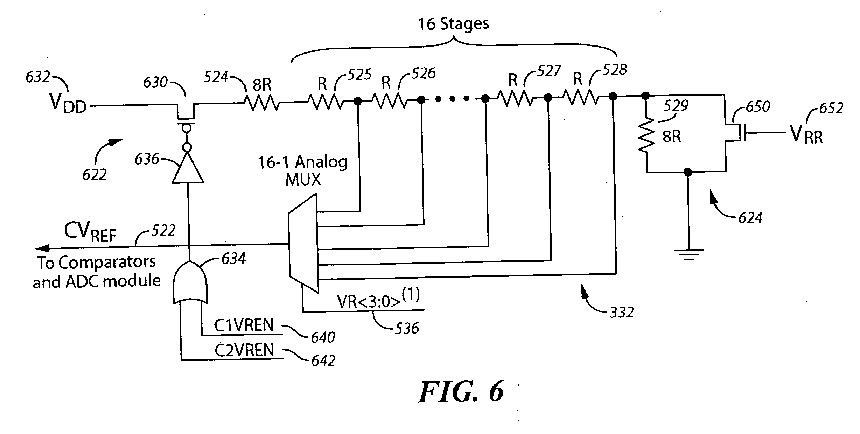

FIG. 6 depicts a simplified schematic diagram of an alternative implementation of a variable reference voltage generator 332 that includes additional reference voltage activation circuitry 622 and a variable reference voltage range selection circuit 624. The activation circuitry 622 includes a switch 630 that connects a voltage source 632 with the resistive stages. The switch can be implemented, in some embodiments, through a transistor such as a FET transistor, with an OR gate 634 connected with an inverter 636 to activate or deactivate the transistor. Two reference voltage enable inputs 640, 642 drive the OR gate 634 such that when either the first enable input (C1V_{REN}) 640 or the second enable input (C2V_{REN}) are high the variable reference voltage generator 332 generates the variable reference voltage 522.

The voltage reference range selection circuitry 624 can include a switch across one or more resistors 529 that shunts the voltage to ground. The switch 650 can be implemented by a transistor, such as a FET transistor, that is activated by a reference range voltage (V_{RR}) 652 supplied by the reference voltage controller 336. As an example, the series of resistors can include eighteen resistors with sixteen stages, where a first resistor 524 and last resistor 529 have resistance values of 8R, while the remaining resistors 525-528 have a resistance of R (e.g., in some instances the resistance R can be equal to 1KΩ). By employing the voltage reference range selection circuitry 624, the variable reference voltage generator can have two (2) ranges with sixteen (16) voltage levels or stages in each range. The range selection is controlled by the reference range voltage V_{RR} 652. With the transistor 650 inactive a voltage is established across the last resistor 529 such that the voltage levels along the taps are high relative to the voltage levels along the taps when the transistor is active and effectively bypassing the last resistor to ground. In some instances, the stages of the variable reference voltage generator scale the reference voltage to within a range of the comparator (e.g., scaling 3.3V to less than 2.0V, such as 1.6V, to utilize a full scale of the comparator). The variable reference voltage generator 332 allows the irrigation device 124 to alter the reference voltage 522 applied to a comparator 334 when evaluating the received signal 420. In some embodiments the reference voltage controller 336 is implemented through software providing a software controlled variable reference voltage level created and inputted into the comparator 334. Further, in some embodiments as described above, the variable reference voltage generator 332 and comparator 334 are integral to the controller 322 (e.g., implemented through a microcontroller). Other embodiments, however, maintain one or both of the variable reference voltage generator 332 and comparator 334 as separate from the controller.

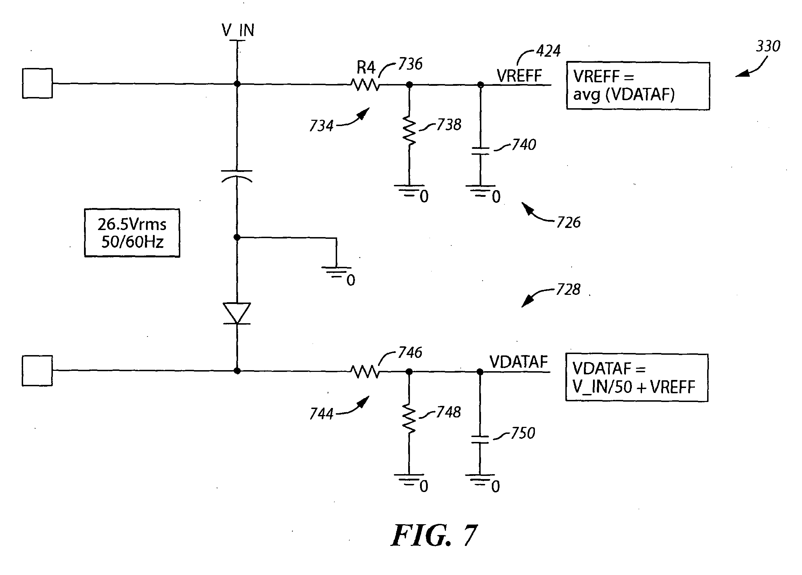

FIG. 7 depicts a simplified schematic diagram of the conversion unit 330 according to some embodiments that in part extracts the data signal VDATAF 722 and defines an input signal reference voltage VREFF 424. The data signal 722 can be applied to the comparator 334 and compared with the variable reference voltage 522. The conversion unit 330 includes an input signal reference voltage circuit 726 and a data signal circuit 728. The input signal reference voltage circuit comprises a relatively large capacitor 732, a voltage divider 734 with first and second resistors 736, 738 and a relatively small value capacitor 740. The data signal circuit 728 includes a voltage divider 744 with first and second resistors 746 and 748 and a relatively small value capacitor 750.

The first capacitor 732 is a relatively large capacitor coupled between the input signal and a reference voltage, such as ground, that effectively stores voltage with reference to ground, that in some embodiments, is approximately 50% or an average between the peak to peak of the input signal. The voltage divider 734 attenuates the voltage depending on the ratio between the first and second resistors 736, 738 and establishes the input signal reference voltage VREFF 424.

Similarly, the voltage divider 744 of the data signal circuit 728 attenuates the input signal based on the ratio of the first and second resistors 746, 748 such that an alternating data signal (VDATAF) 722 is provided. The small value capacitors 740 and 750 in combination with the first resistors 736, 746 of the input signal reference voltage circuit 726 and the data signal circuit 728, respectively, establish low pass filters that effectively shunt high frequency noise to ground.

The attenuation is used to scale the input signal to at least in part produce the input signal reference voltage in defining a DC offset VREFF 424 and the incoming data signal 722 into more readily useable and predictable levels to be used and/or read by integrated circuits and/or a microcontroller, such as to levels of about 5V or less and depending on implementation. For example, in some embodiments, the relatively large capacitance 732 of the input signal reference voltage circuit 726 can be about 220uF with the first and second resistors 736, 738 having a ratio of about 50/1 (e.g., about 470KΩ and 10KΩ, respectively), and the small value capacitor 740 being about 0.1uF ; and the first and second resistors 746, 748 of the data signal circuit 728 having a similar ratio of about 50/1 (e.g., about 470KΩ and 10KΩ, respectively), and the small value capacitor 750 being about 0.1uF, which can be utilized, for example, when the voltage level of the input signal is approximately +/-40V. The input signal reference voltage VREFF 424 allows the system to adjust the comparator reference voltages 430, 432 according to the input signal reference voltage. In the example above, the input signal reference voltage 424 is about the average of the data signal 722 while the data signal is about equal to the voltage of the input signal divided by about 50 plus the input signal reference voltage VREFF 424. Further, in some embodiments the scaling of the input signal can be provided to maintain the voltage level within a full range of the comparator 334 and/or less than the full range to provide a margin.

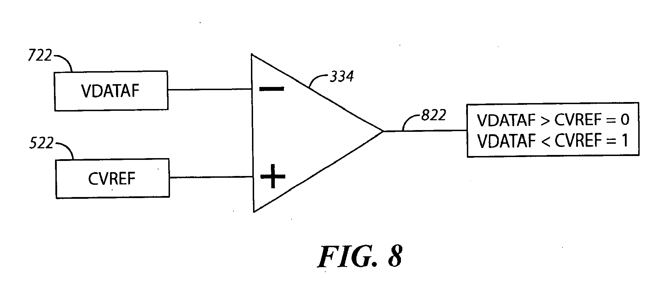

FIG. 8 depicts a simplified schematic diagram of a comparator 334. The comparator receives the data signal 722 and the variable reference voltage 522 from the variable reference voltage generator 332. In some implementations, variable reference level CV_{REF} 522 supplied to the non-inverting input of a comparator while the data signal 722 is supplied to the second input. The comparator 334 generate a comparator output at a high signal or a low signal depending on the relationship between the variable reference voltage 522 and the data signal 722. For example, the comparator can generate a low signal when the data signal exceeds the variable reference voltage and a high signal with the data signal falls below the variable reference voltage.

The comparator output 822 is forwarded to the controller 322 to be utilized in determining whether a synchronization identification is detected and/or to detect data bits. Further, the comparator output can be forwarded to the memory 324, such as a register (e.g., a shift register) to record one or more of the data bits. The ID comparator 342 and/or communication evaluator 344 can similarly receive or retrieve the comparator outputs as described above and further below.

In some embodiments, the irrigation device 124 is implemented through relatively simple circuitry. Further, many of the components are non-active components and do not need power to operate or only need minimal amounts of power to operate. For example, the conversion unit 330 can be implemented in some instances with inactive devices and as such do not need power to operate. Similarly, the comparator 334 and variable reference voltage generator 332 can be implemented through hardware, non-active devices and/or devices that draw only minimal power. As a result, the irrigation device 124 can substantially shut down processing, control and/or other functionality for large percentages of the data signal. The irrigation device can be implemented without active sampling of the data signal as the comparator in cooperation with at least the variable reference voltage generator and conversion unit allows the device easily detect states of the signal. Further, the processing of the data signals can be achieved through relatively simplified processing. Additionally, some embodiments utilize the same circuitry in detecting a synchronization pulse(s) and decoding data bits at least in part by providing for the altering the variable reference voltage. Other embodiments, however, can employ multiple comparators and/or reference voltage generators.

In many embodiments, the irrigation device 124 and/or the processor(s), microprocessor(s) or microcontroller(s) implementing the irrigation device can be shifted to a sleep or inactive mode such that relatively minimal amounts power are drawn. Further, with the simplified detection and/or activation the sleep state or mode can be maintained for relatively large portions or percentages of time.

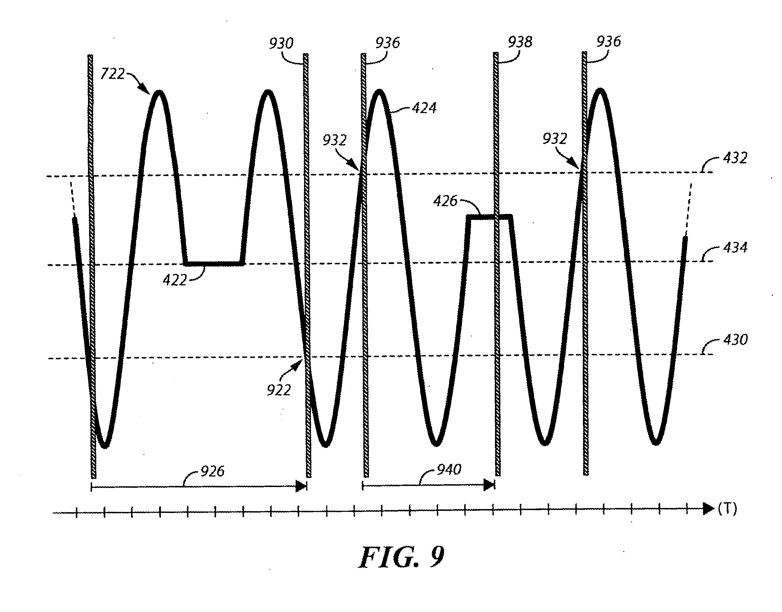

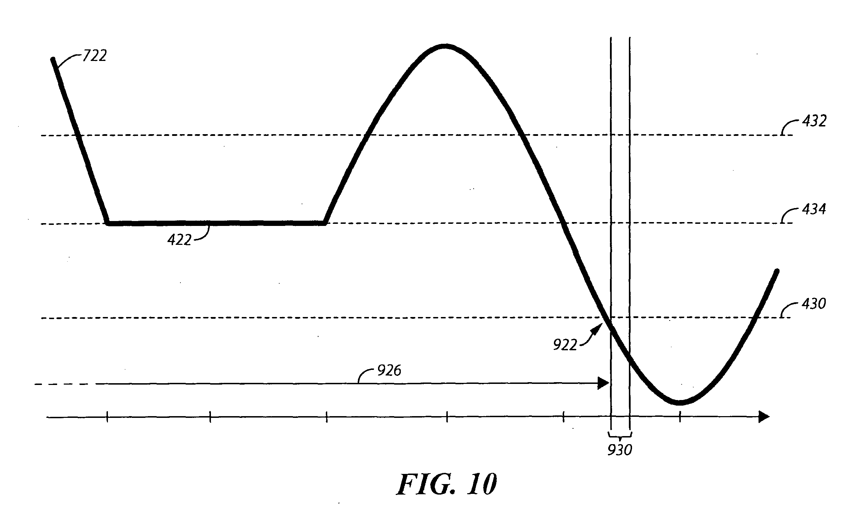

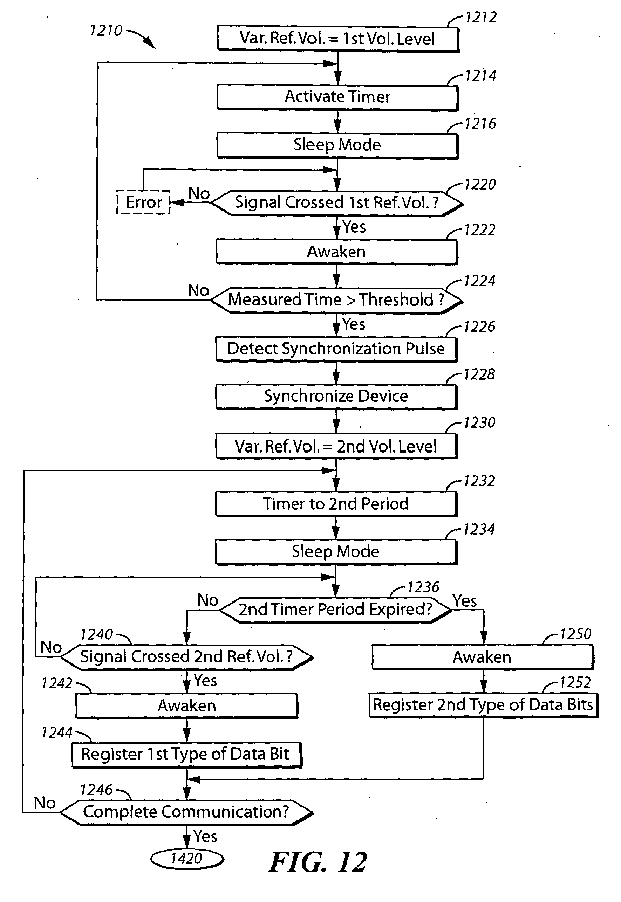

FIG. 9 depicts a simplified graphical representation of voltage over time (T) of a data signal 722 encoded according to some implementations that can be extracted and/or generated through the conversion unit 330 based on an input signal received over a two-wire interface 126. FIGS. 10-11 show expanded views of portions of the data signal 722 of FIG. 9. FIG. 12 depicts a simplified flow diagram of a process 1210 according to some embodiments implemented through the irrigation device 124 that extracts data bits from an encoded alternating or AC voltage signal. Referring to FIGS. 9-12, in step 1212, the variable reference voltage CV_{REF} 522 is set by the variable reference voltage generator 332 to a first reference level, for example to a low level 430 in preparation for detecting a synchronization pulse or pattern 422. In some implementations, the first reference level is set to a voltage level about midway between the input signal reference level VREFF 434 and a peak negative voltage level of the data signal VDATAF 722. In step 1214, a timer 340 is activated. In step 1216, the irrigation device 124 enters a sleep or hibernation state. During this sleep state many of the components of the irrigation device are powered down or only necessary elements of components are active resulting in a significant reduction in power use. In some embodiments, substantially all peripherals of the controller 322 and a CPU of the controller are put into sleep mode. Further in some implementations, only the comparator 334, conversion unit 330, variable reference voltage generator 332 and timer 340 remain active during the sleep state.

In step 1220, it is determined whether the signal voltage 722 of the data signal crosses a first reference level 430. In the example of FIG. 9, the threshold can be a low threshold 430 where the signal crosses this low threshold at a point identified by reference numeral 922. When it is determined that the signal does not cross the threshold the process loops awaiting the threshold crossing. This wait period can optionally, in some implementations, be limited by an alternative timer and/or a secondary time threshold indicating an error condition or other relevant condition. This optional error condition, however, is not included in some implementations such that when no edges are present there is no need to wake and process data. Additionally or alternatively, a timer can time out at about a center of a synchronization pulse 422 and wake the controller.

When the signal crosses the first reference level 430 indicated in FIG. 9 by reference numeral 922, step 1222 is entered where a trigger or interrupt wakes the controller 322 from the sleep state 930, the crossing of the lower threshold 430 is acknowledged, a first measured time period 926 is registered and the timer is reset and again activated. In step 1224, the value of the measured time period is compared with a first time threshold value, such as one or more timer values (e.g., two previous time periods), and it is determined whether the measured time has a predefined relationship with the first time threshold, for example is greater than a previously measured, about twice the amount of one or more previously measured times or other such threshold. When the measured time does not have the predefined relationship, the system returns to step 1214 to activate the timer and return to the sleep state in step 1216.

Alternatively, when the measured time has the predefined relationship with the first time threshold, step 1226 is entered where the system recognizes a missed pulse and registers the detection of a synchronization pulse. This processing consists of relatively few software instructions and/or processing steps that can be implemented in a relatively short duration of time. Therefore, the irrigation device 124 is active for only a relatively short duration of time, indicated in FIG. 9 by the period labeled with reference numeral 930. As introduced above, a routine or process that is activated after awakening from a sleep state can comprise relatively few instructions, in some instances less than about 100 instructions. With an 8 MHz system clock with a divide by four instruction rate, the time for instruction and/or execution would be on the order of about 50 microseconds or less per every 16.67ms (60 Hz) cycle or about 0.3% duty cycle. Therefore, the wake or active time of the irrigation device 124 is only a small percentage of a cycle resulting in significant reductions in power consumption. Further, some embodiments employ hardware detection of positive and negative peaks that provide additional reductions in the amount of memory and/or processing power in decoding a two-wire waveform.

Still referring to FIGS. 9-12, the determination in step 1224 that the measured time period has the predefined relationship with the first time threshold is an indication that the signal was clipped 422, for example, the low voltage peak was clipped such that the voltage level of the data signal does not cross the first reference voltage 430. FIG. 10 shows an expanded view of the portion of the data signal 722 with the clipped synchronization pulse 422 according to this example. The clipping in this example of the negative peak indicates a synchronization pulse; however, other clipping and/or a sequence of clipped peaks can be used to indicate a synchronization indication.

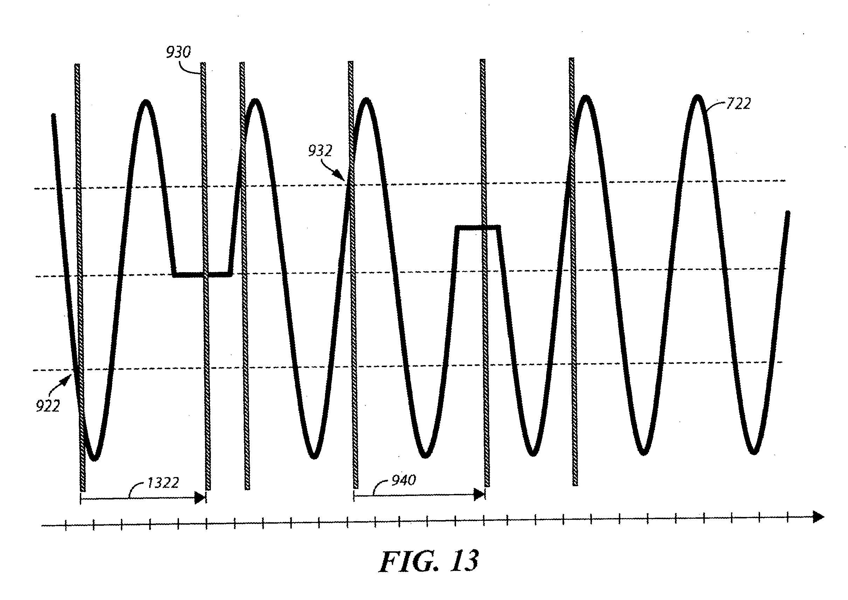

Additionally or alternatively, the process 1210 can be configured in detecting the synchronization pulse by determining whether a synchronization timer reaches a timer threshold and/or counts down to a zero value following a detection that the voltage level of the data signal crossed 922 of the lower voltage threshold 430. FIG. 13 depicts a graphical representation of the data signal similar to that of FIG. 9. In some instance, the irrigation device remains in the sleep state until triggered by the timer indicating that the synchronization time period 1322 expired or the voltage level of the data signal crosses 922 the first threshold 430 resetting the synchronization timer. When it is determined that the synchronization time period has been exceeded or expired, a trigger can be generated indicating that a synchronization pulse 422 has been detected and awakens 930 the irrigation device 124 from the sleep state to a processing state. The controller 322 can preset the timer 340 to timeout, for example, at about the middle of the next negative pulse. Each time the data signal VDATAF 722 crosses the synchronization threshold (e.g., threshold set at a low reference voltage level 430) the controller wakes and resets the timer. When the threshold is not reached before the timer reaches the timeout, the timer wakes the controller identifies, in this example, that a synchronization pulse was received.

Still referring to FIG. 13, the synchronization time 1322 period can be proportional to the period of the alternating input signal such that the expiration of the synchronization time period indicates that the signal was clipped 422, for example, the low voltage peak was clipped such that the voltage level of the data signal does not cross the first reference voltage 430. In some instances, this synchronization time period 1322 is set to extend beyond where the signal would have crossed the first reference level 430, for example, set to about equal with where a peak of the signal would occur had the peak not been clipped. The expiration of the synchronization time period indicates that the signal was clipped and the detection of a synchronization pulse 422. Still other embodiments may additionally or alternatively employ a timer that can be adjusted based on the frequency of the received input signal and is set to trigger at about each peak that awakens the system to check the level of the input signal relative to the reference voltage.

Referring back to FIGS. 9-12, upon detecting the synchronization pulse 422, step 1228 is entered and the irrigation device is synchronized relative to the input signal. In step 1230, the variable reference voltage CV_{REF} 522 is set to a second reference level 432, for example, to a relatively high level. In some implementations, the second reference level is set to a voltage level about midway between the input signal reference level VREFF 434 and a positive peak voltage level of the data signal VDATAF 722. Defining the reference voltage to a midpoint provides, in part, some compensation for noise. In step 1232, the timer 340 is reset and set to a second time period proportional the oscillation period of the data signal. Following step 1232, the irrigation device is returned to a sleep state in step 1234. Again, the processing performed following the detection of the synchronization pulse can be a relatively short duration 930 and then the irrigation device returns to the sleep state.

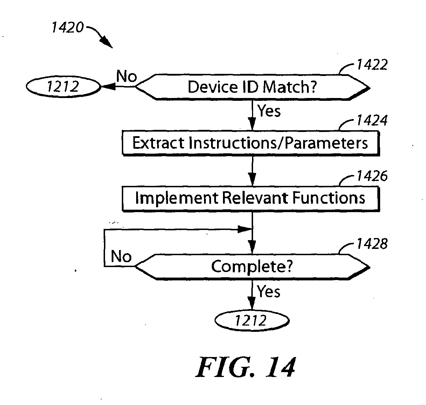

In step 1236, it is determined whether the second time period has expired. When the second time period has not expired, step 1240 is entered where it is determined whether the input signal voltage has crossed the second reference voltage 432. When the input signal voltage has not crossed the second reference voltage, the process 1210 returns to step 1236. Alternatively, when input signal crosses the second reference voltage (labeled in FIG. 9 with reference numeral 932) the process continues to step 1242 where the irrigation device 124 is again awakened 936. In step 1244, a first type of data bit associated with the crossing of the second threshold (e.g., a logic level one (1) data bit) is registered and/or recorded. In step 1246, it is determined whether a complete communication or packet is received. For example, it can be determined whether a fixed number of bits have been received since a synchronization identification, a predefined pattern of bits are received indicating an end of a communication or other such indicators. When a complete communication has not been received the process returns to step 1232 to reset the timer and prepare to detect a subsequent data bit. Alternatively, in some implementations when a complete communication is received the process 1210 activates an additional process 1420 as described below with reference to FIG. 14, and returns to step 1212 to set the variable reference voltage 522 to the first voltage level 430 and step 1214 to start the timer for the first time period to detect the synchronization pulse or other identification. In other implementations, multiple data communications can be received between synchronization pulses and as such, the process can optionally return to step 1232 to detect subsequent data communications.

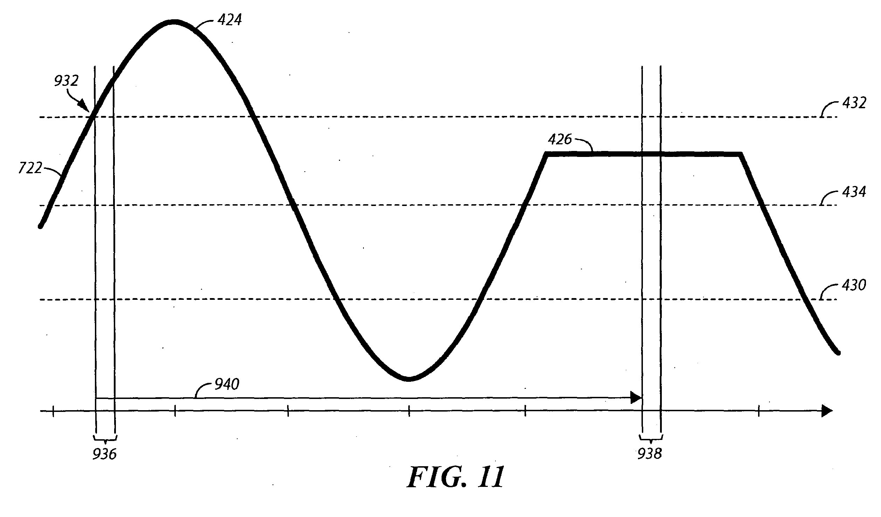

When it is determined in step 1236 that the second time period 940 did expire, step 1250 is entered where the irrigation device 124 is reawakened 938. In step 1252, a second type of data bit associated with a clipped signal 426 (e.g., a logic level zero (0) data bit) is registered and/or recorded. FIG. 11 shows an expanded view of the portion of the data signal 722 with the clipped data signal 426 indicative of a second type of data bit according to this example. The process 1210 then continues to step 1246 to determine whether a complete communication is received.

As introduced above, the detection of the crossing of the first and/or second variable reference voltage levels 430, 432 is achieved in some embodiments through components of the irrigation device 124 that are passive and as such do not utilize or only minimally utilize power during detection allowing substantially the remainder of the irrigation device to be powered down and/or put into a sleep state. Further, the various instructions in detecting and/or registering synchronization identifiers and/or data bits can be implemented in relatively few processing instructions (e.g., on the order of a few hundred instructions or less) such that those periods of time 930, 936 and 938 where the irrigation system is actively processing the input signal is a relatively short time, for example less than 25% of the duty cycle and in some instances less than 1% of the duty cycle. Additionally or alternatively, some embodiments employ a relatively very slow clock rate, such as less than about 500KHz (e.g., 200KHz, 120KHz, 32 KHz watch crystal or other relevant rates), instead of putting the system 120 and/or microcontroller implementing the some or all of the system 120 into the sleep state or mode. This relatively slow operating rate similarly can have significant power consumption effects providing similar power savings as achieved when employing the sleep states. Operating at lower speeds does not adversely affect the reference voltage as the reference voltage generator is typically not dependent on a timer or the clock rate. Other embodiments can employ both relatively slow clock rates and the sleep state in attempts to reduce power demands. The system 120 is able to run at a relatively slow clock rates due at least in part to the simplified algorithms employed and/or the simplified implementation. As described above, the system typically does not have to sample the data signal 722 and instead employs the comparator 334 and/or timer 340 that trigger the awakening of the system or that can operate at relatively slow clock rates because they are not dependent on the rate of the signal but the crossing of threshold voltage levels.

FIG. 14 depicts a simplified flow diagram of a process 1420 according to some embodiments that identifies communications and implements appropriate actions. In step 1422, it is determined whether the received communication is directed to the receiving irrigation device 124. As described above, in some implementations a plurality of irrigation devices can couple with a single two-wire interface 126 and as such numerous communications from the irrigation controller 122 and/or other devices on the two-wire interface (such as other irrigation devices and the like). The irrigation device in receiving the communications determines in step 1422 whether the communication is directed to the irrigation device or another device on the two-wire interface. This determination can be achieved, for example, by extracting a receiving device identifier (e.g., a first predefined number of bits of the communication are a receiving device ID, a last predefined number of bits (prior to the end of communication pattern if present), a previous communication identified the receiving device for a next communication, and/or other relevant identifiers). The receiving device identifier is compared with a local identifier to determine whether the communication is directed to the receiving device. In some embodiments, one or more identifiers can be specific to the irrigation device, one or more identifiers can be specific to a selected number of devices on the two-wire interface 126, one or more identifiers can be generic to all devices on the two-wire interface (e.g., a master command), and/or other such identifiers and/or combinations of identifiers, where the plurality of identifiers may allow the irrigation controller 122 and other devices on the two-wire interface to send communications to multiple devices with a single communication, or issue communications to a specific device. In some instances, the one or more identifiers are a function of protocol construction.

When it is determined that the communication is not directed to the irrigation device, the process 1420 terminates and returns to step 1212 of process 1210 of FIG. 12. Alternatively, when the communication is directed to the irrigation device, step 1424 is entered where the communication is evaluated and one or more instructions, parameters and the like are extracted. In step 1426, one or more local parameters are altered, instructions are implemented and/or other relevant functions are performed. For example, when the communication includes instructions to activate the field stations 130 associated with the irrigation device 124, the activation is implemented in step 1426. In step 1428 the process determines whether appropriate functions are completed. The completion may be based on the change of a parameter, the activation of irrigation, the completion of irrigation run time and/or other such completions. When the function(s) is not complete, the process loops until finished. Following the implementation of the instruction(s), altering or parameter(s) and/or the like, the process terminates and returns to step 1212 of process 1210 of FIG. 12.

The encoded input signal 420, in some instances, can include clipping on the negative peaks, clipping on the positive peaks or on both the positive and negative peaks. For example, the negative peaks can be redundant of data encoded on the positive peaks, or each peak can be a distinct data bit. In detecting the additional encoding, the variable reference voltage can be transitioned between each peak, and/or a second comparator can be utilized in comparing the negative peaks while a first comparator compares positive peaks. Some embodiments, however, attempt to maintain some what of a negative bias in the field about the two-wire interface that can limit and/or prevent wire corrosion and/or electrolysis. As such, these embodiments employ encoding of data on to the signal by modulating the positive peaks (e.g., clipping the positive peaks) when the number of data bits exceed the number of synchronization pulses.

In some embodiments, the irrigation device 124 can transmit data over the two-wired interface 126. These embodiments include an encoder that modulates a signal to be communicated. In some implementations, the variable reference voltage can additionally be utilized in the transmission in setting levels of clipping and/or other parameters based on the change in the variable reference voltage levels.

As described above, the encoding implemented through the encoder 134 of the irrigation controller 122 and/or by an encoder of the irrigation device 124 or other device on the two-wire interface can be implemented by clipping or attenuating peaks of the alternating signal and/or applying multi-level voltage steps. In some instances encoding of data on an alternating power signal includes clipping a positive portion of the alternating power signal, clipping a negative portion of the alternating power signal, and applying the alternating power signal to a two wire path of the irrigation control system having a plurality of remotely located irrigation control devices each including a decoder. Other methods of encoding data on an alternating power signal can clip a negative portion of the alternating power signal, and apply the alternating power signal to a two-wire path of an irrigation control system having a plurality of remotely located irrigation control devices each including a decoder.

The present embodiments provide simplified communication over a two-wired interface and reduce power consumption in decoding communication over the two-wire interface. Some embodiments provide software controlled hardware solutions to reduce the complexity and/or eliminate many of the algorithms employed in decoding and allow the system and/or processor to remain in sleep mode (or operate at reduced clock rates) until a hardware interrupt or timer interrupt. The high percentage of time in sleep mode allows the operation and/or processing to use a minimal amount of power. As described above, a typical routine that is run after awakening the system can be less than one hundred instructions. For example, when operating with an 8 MHz system clock with a divide by four instruction rate the time of code execution, the operating time would be about less than 50µs drawing about 1 or 2mA of run current. When running on 50Hz, the system is active for about 50µs per every 20ms or about a 0.25% duty cycle, resulting in about 5µA of run current averaged over time, and in some instances an additional 50µA of quiescent draw for analog peripheral devices, such as the comparator 334 and variable reference voltage generator 332. Which when compared with systems that continuously sample the input signal and are thus continuously operating at about 2mA of run current, and with multiple devices such as hundreds or thousands of devices on a single two-wire interface, the present embodiments can provide significant power savings. Hardware detection of positive and negative peaks also reduces the amount of memory and processing power needed to decode a two-wire waveform. Lower power allows for more devices on the same wire path and smaller computing needs allows for a more cost effective system, microcontroller and/or microprocessor selection.

Additional wake and/or power up time may be employed when verifying a communication is addressed to an irrigation device, identifying actions to be taken and/or in implementing the instructions (e.g., activating irrigation devices, changing parameters). In some embodiments, the irrigation device further includes a communication transmission system that can encode a signal that is transmitted back to a central controller 140 or other device. The encoding and transmission can further utilize additional active or wake time.

While the invention herein disclosed has been described by means of specific embodiments and applications thereof, numerous modifications and variations could be made thereto by those skilled in the art without departing from the scope of the invention set forth in the claims.

## Claims

1. A method of controlling irrigation based on communications over a two-wire interface, comprising:
defining a reference voltage at a first voltage level;
receiving an AC voltage input signal;
detecting a synchronization identifier encoded on the signal relative to the reference voltage at the first level;
defining the reference voltage at a second voltage level;
identifying a first data bit of a communication to coordinating irrigation encoded on the signal following the synchronization identifier.

2. The method of claim 1, further comprising:
awakening from a sleep state in response to the detecting of the synchronization identifier and implementing the defining of the reference voltage to the second voltage level;
returning to the sleep state following the defining the reference voltage to the second voltage level; and
awakening from the sleep state and implementing the identifying of the first data bit.

3. The method of claim 2, wherein the reawakening comprises detecting that a voltage level of the input signal crosses the reference voltage defined at the second level and implementing the reawakening in response to the detecting that the voltage level of the input signal crosses the reference voltage defined at the second level.

4. The method of claim 2, further comprising:
activating a timer in response to the detection of the synchronization identifier, wherein the awakening and implementing the identifying of the first data bit comprises detecting an expiration of the timer.

5. The method of claim 2, further comprising:
activating a timer in response to the awakening and implementing the identifying of the first data bit;
determining whether a first threshold time period has been exceeded since the awakening and the identifying of the first data bit; and
again awakening from the sleep state and identifying a subsequent data bit encoded on the signal when a first threshold time period has been exceeded.

6. The method of claim 5, further comprising:
detecting that a voltage level of the input signal crosses the reference voltage defined at the second level;
implementing the awakening and detecting of the first data bit in response to the detecting that the voltage level of the input signal crosses the reference voltage defined at the second level; and
resetting the timer in response to the detecting that the voltage level of the input signal crosses the reference voltage defined at the second level.

7. The method of claim 2, wherein the awakening and implementing the identifying of the first data bit comprises detecting that a threshold time period has been exceeded relative to the detecting of the synchronization identifier.

8. The method of claim 1, further comprising:
evaluating the input signal; and
determining an input reference voltage relative to the input signal such that the defining the reference voltage at the first and second voltage levels where the first and second voltage levels are relative to the determined input reference voltage level.

9. The method of claim 1, wherein the detecting the synchronization identifier comprises detecting a clipping of a negative pulse.

10. A method of controlling irrigation, comprising:
setting a variable reference voltage to a first voltage level and activating a timer;
determining whether the timer exceeds a first time threshold;
registering a first type of data bit in response to determining that the first time threshold is exceeded;
comparing a voltage level of a modulated AC voltage input signal received over a two-wire interface regarding implementing irrigation with the variable reference voltage set at the first voltage level prior to determining that the first time threshold has been exceeded;
detecting when the voltage level of the input signal exceeds the variable reference voltage set at the first voltage level prior to determining that the first time threshold has been exceeded; and
registering a second type of data bit when it is determined that the voltage level of the input signal exceeds the variable reference voltage set at the first voltage level.

11. The method of claim 10, further comprising:
entering a sleep state following the setting of the variable reference voltage to the first voltage level;
implementing the step of determining whether the timer exceeds the first time threshold while in the sleep state;
awakening from the sleep state and implementing the step of registering the first type of data bit in response to determining that the first time threshold is exceeded;
implementing the step of comparing the voltage level of the modulated AC voltage input signal with the variable reference voltage set at the first voltage level while in the sleep state;
awakening from the sleep state and implementing the step of registering the second type of data bit when it is determined that the voltage level of the input signal exceeds the variable reference voltage set at the first voltage level, and returning to the sleep state.

12. The method of claim 10, further comprising:
detecting that a complete communication is received;
changing the variable reference voltage to a second voltage level;
detecting a synchronization identification relative to the variable reference voltage at the second voltage level; and
changing the variable reference voltage to the first voltage level in response to the detection of the synchronization identification.

13. The method of claim 12, wherein the detecting the synchronization identification comprises identifying a clipped peak of the modulated input signal.

14. The method of claim 10, further comprising:
reducing a power consumption by operating at a clock rate of less than 500KHz.

15. The method of claim 10, further comprising:
reducing a power consumption by operating at less than 10% of a duty cycle of the AC voltage signal

16. A method of implementing irrigation through communications over two-wire interface, comprising:
comparing a voltage level of an AC voltage input signal directed to controlling irrigation with a variable reference voltage set at a first voltage level;
detecting when the voltage level of the input signal fails to cross the variable reference voltage at the first voltage level;
changing the variable reference voltage to a second voltage level in response to the detection that the voltage level of the input signal fails to cross the variable reference voltage at the first voltage level; and
detecting a data bit relative to the second voltage level.

17. The method of claim 16, further comprising:
awakening from a sleep state when it is detected that the voltage level of the input signal fails to cross the variable reference voltage at the first voltage level and implementing the changing of the variable reference voltage to the second voltage level;
returning to the sleep state following the changing of the variable reference voltage to the second voltage level; and
awakening from the sleep state following the detection of the data bit relative to the second voltage level.

18. The method of claim 17, further comprising:
returning to the sleep state following the detecting of the data bit; and
again awakening from the sleep state and detecting a subsequent bit of a communication relative to the second voltage level.

19. The method of claim 16, further comprising:
determining whether a complete communication is received;
determining whether the communication includes instructions to be implemented when the complete communication is received; and
implementing the instructions when the instructions are to be implemented locally.

20. The method of claim 16, wherein the detecting when the voltage level of the input signal fails to cross the variable reference voltage set at the first voltage level comprises detecting that a first threshold time has been exceeded since a previous detection that the voltage level of the input crossed the variable reference voltage set at the first voltage level.

21. The method of claim 16, wherein the detecting of the data bit comprises detecting that a voltage level of the input signal crosses the variable reference voltage set at the second voltage level and implementing the registering a first data bit type.

22. The method of claim 21, wherein the detecting of the data bit of the communication further comprises detecting that a second time threshold has been exceeded following a preceding detection of a data bit and registering a second data bit type.

23. A system that implements irrigation, comprising:
a two-wire interface input that receives an alternating signal;
a conversion unit coupled with the two-wire interface input that generates a data signal according to the received alternating signal;
a variable reference voltage generator that generates a reference voltage;
a comparator coupled with the conversion unit and the variable reference voltage generator such that the comparator outputs comparator signals relative to a relationship between a voltage level of the data signal and a voltage level of the reference voltage; and
a controller coupled with the comparator that receives the comparator signals.

24. The system of claim 23, wherein the conversion unit coupled with the two-wire interface input that further generates an input signal reference voltage that is dependent on the received alternating signal and used to dictate a level of the reference voltage generated by the variable reference voltage generator.

25. The system of claim 23, wherein the controller comprises an identification comparator that retrieves a device identifier from the comparator signals and determines whether a communication encoded on the alternating signal is directed to the system.

26. An apparatus that controls irrigation, comprising:
a two-wire interface input coupled with a two-wire interface to receive an AC voltage current input signal;
a conversion unit coupled with the two-wire interface input to receive the input signal and output an alternating data signal proportional to the input signal;
a variable reference voltage generator that generates a reference voltage;
a comparator coupled with the variable reference voltage generator and the conversion unit and compares the reference voltage with the data signal generating a comparator output relative to a relationship between the reference voltage and the data signal; and
memory that stores levels of the comparator output.

27. The apparatus of claim 26, further comprising:
a reference voltage controller that couples with the variable reference voltage generator and instructs the variable reference voltage generator to alter the reference voltage.

28. The apparatus of claim 27, further comprising:
a timer cooperated with the comparator that is reset upon a transition of the comparator output between a first level and a second level, and further cooperated with the register such that the register registers when a time threshold expires.

29. The apparatus of claim 28, further comprising:
a controller coupled with the comparator, the timer and the register, where the controller is activated upon detection of the transition of the comparator output and when the time threshold expires to activate the register.

30. The apparatus of claim 29, further comprising:
an identification comparator coupled with the controller and the register, where the identification comparator is activated by the controller to extract a device identification based on levels recorded in the register and to determine whether the extracted device identification matches a local identification.

31. The apparatus of claim 30, further comprising:
an irrigation activation unit coupled with the controller and the register; where the irrigation activation unit is activated by the controller to retrieve an instruction from the register when the identification comparator detects a match and to implement the instruction.

32. The apparatus of claim 31, wherein the controller, the identification comparator and the irrigation activation unit are maintained in a sleep state and the controller is reawakened and activated upon detection of the transition of the comparator output and when the time threshold expires to activate the register, and further the controller controls the awakening of the identification comparator and the irrigation activation unit.

33. The apparatus of claim 30, further comprising:
a communication evaluation unit coupled with the controller, where the communication evaluation unit identifies when a complete communication is received.

34. The apparatus of claim 33, wherein the controller instructs the variable reference voltage generator to change a level of the reference voltage when the complete communication is received.

35. The apparatus of claim 30, further comprising:
a microprocessor comprising the controller, the conversion unit, the variable reference voltage generator, the comparator and the register, such that the controller and register are maintained in a sleep state re-awakened and activated upon detection of the transition of the comparator output and when the time threshold expires to activate the register.

36. A method of decoding a signal from a two wire path in an irrigation control system comprising:
selecting a first reference voltage level from a plurality of reference voltage levels;
determining when a voltage level of an AC voltage input signal coordinating irrigation reaches the first reference voltage level; and
decoding data encoded on the input signal based on the determining step.

37. The method of claim 36, wherein the each of the plurality of reference voltage levels are between peaks of the input signal.

38. A method of decoding a signal from a two wire path in an irrigation control system comprising:
selecting a first reference voltage level from a plurality of reference voltage levels;
determining when a voltage level of an incoming voltage signal directed to controlling irrigation reaches the first reference voltage level;
selecting a second reference voltage level from the plurality of reference voltage levels relative to the determination of when the voltage level of the incoming voltage signal reaches the first reference voltage;
determining when the voltage level of the incoming voltage signal reaches the second reference voltage level; and
decoding data encoded on the incoming voltage signal based on the determining when the voltage level of the incoming voltage signal reaches the second reference voltage level.
